# EUROPEAN PATENT APPLICATION

(11) **EP 4 620 559 A1**
(43) Date of publication of application: **24.09.2025**
(21) Application number: 23891057.4
(22) Date of filing: 31.01.2023
(51) Int. Cl.: B01D 61/18, B01D 65/02, B01D 29/01, B01D 29/66, C02F 1/44

(54) **ULTRASONIC LIQUID TREATMENT DEVICE**

(30) Priority: 16.11.2022 JP 2022183746
(71) Applicant: Tukurinochie Co. Ltd., Iruma City, Saitama 358-0014 (JP)
(72) Inventor: TAKAHASHI, Kazuaki, Iruma City, Saitama 358-0014 (JP); Jin, Masahiko, Shimotsuga-gun Tochigi 329-0111 (JP)
(74) Representative: Stevens Hewlett & Perkins
(86) International application number: PCT/JP2023/003125
(87) International publication number: WO 2024/105895

(57) **Abstract**

[Problem] To provide an ultrasonic liquid treatment apparatus that enables liquid treatment by efficient filtering with a simple configuration.

[Means for Resolution] An ultrasonic unit is structured to filter a liquid. The ultrasonic unit filters the liquid for treatment by ultrasonic vibration of the ultrasonic unit. Alternatively, the ultrasonic unit filters the liquid for treatment by the ultrasonic vibration of the ultrasonic unit in a state of applying a pressure to the liquid. In this way, the liquid treatment is enabled by efficient filtering with a simple configuration.

## Description

### Technical Field

The present invention relates to an ultrasonic liquid treatment apparatus that filters a liquid for treatment by ultrasonic vibration.

### Background Art

For example, inorganic solids, such as metal and ceramics, and organic solids are subjected to treatment, such as grinding, polishing, or pulverization, and fine particles are produced at the time. Then, these fine particles are generally flushed away by a fluid such as water, and the fluid containing the fine particles is released as wastewater or sewage.

An expensive filtration treatment apparatus or the like is used for such treatment. The filtration treatment apparatus or the like removes substances to be removed, and wastewater becomes a clean fluid and is reused. Meanwhile, residue that cannot be removed is treated as industrial waste. In particular, water that has been cleaned is returned to the nature, such as a river or ocean, or is reused.

In such treatment, there is a case where a tank (a storage tank) is used for the filtration treatment apparatus or the like. In the tank (the storage tank), wastewater is stored, and filtered water is stored in a lower layer of a filtration membrane. This stored filtered water is then pumped to various locations (Patent Literature 1).

### Citation List

### Patent Literature

Patent Literature 1: JP-A-2002-52388

### Summary of Invention

### Technical Problem

There is a case where the filtration membrane is used in such liquid treatment. However, the filtration membrane has a problem of a reduced treatment amount caused by contaminants or caught substances, for example.

Therefore, in order to solve the above problem, an object of the present invention is to provide an ultrasonic liquid treatment apparatus capable of efficiently filtering and treating a liquid with a simple configuration.

### Solution to Problem

In order to solve the above problem and to achieve the object, the present invention is configured as follows.

The invention according to a first aspect is an ultrasonic liquid treatment apparatus that includes:
a treatment section that treats a liquid;
an ultrasonic unit that is arranged in the treatment section; and
an ultrasonic transmitter that drives the ultrasonic unit, in which the ultrasonic unit is structured to filter the liquid, and
the ultrasonic unit filters the liquid for treatment by ultrasonic vibration of the ultrasonic unit.

The invention according to a second aspect is an ultrasonic liquid treatment apparatus that includes:
a treatment section that treats a liquid;
an ultrasonic unit that is arranged in the treatment section;
an ultrasonic transmitter that drives the ultrasonic unit; and
pressure application means that applies a pressure in a flow direction of the liquid, in which
the ultrasonic unit is structured to filter the liquid, and
in a state where the pressure application means applies the pressure to the liquid,
the ultrasonic unit filters the liquid for treatment by ultrasonic vibration of the ultrasonic unit.

The invention according to a third aspect is the ultrasonic liquid treatment apparatus according to the first aspect or the second aspect in which
the ultrasonic unit includes a filtration membrane and an ultrasonic transducer,
the filtration membrane and the ultrasonic transducer are separate components, and
by the ultrasonic vibration of the ultrasonic transducer, the liquid is conveyed, and the filtration membrane filters the liquid for treatment.

The invention according to a fourth aspect is the ultrasonic liquid treatment apparatus according to the first aspect or the second aspect in which
the ultrasonic unit includes a filtration membrane and an ultrasonic transducer,
the filtration membrane and the ultrasonic transducer are integrated components,
by the ultrasonic vibration of the ultrasonic transducer, the filtration membrane vibrates integrally and conveys the liquid, and
the filtration membrane filters the liquid for treatment.

The invention according to a fifth aspect is the ultrasonic liquid treatment apparatus according to the first aspect or the second aspect in which
the ultrasonic unit includes an ultrasonic transducer,
the ultrasonic transducer is configured as a membrane, and
by the ultrasonic vibration of the ultrasonic transducer, the liquid is conveyed, and the liquid is then filtered for treatment.

The invention according to a sixth aspect is the ultrasonic liquid treatment apparatus according to any one of the first aspect, the third aspect, the fourth aspect, and the fifth aspect in which
the treatment section is a non-pressurization filtration tank,
the ultrasonic unit
has a filtration structure having a membrane pore size from 0.001 µm to 100 µm, and
generates the ultrasonic vibration from 20 KHz to 4 MHz.

The invention according to a seventh aspect is the ultrasonic liquid treatment apparatus according to any one of the first aspect, the third aspect, the fourth aspect, and the fifth aspect in which
the treatment section is a non-pressurization water purifier, and
the ultrasonic unit
has a filtration structure having a membrane pore size from 0.001 µm to 10 µm, and
generates the ultrasonic vibration from 20 KHz to 4 MHz.

The invention according to an eighth aspect is the ultrasonic liquid treatment apparatus according to any one of the first aspect, the third aspect, the fourth aspect, and the fifth aspect in which
the treatment section is a solar-powered water purifier, and
the ultrasonic unit
has a filtration structure having a membrane pore size from 0.001 µm to 10 µm, and
generates the ultrasonic vibration from 20 KHz to 4 MHz.

The invention according to a ninth aspect is the ultrasonic liquid treatment apparatus according to any one of the second aspect, the third aspect, the fourth aspect, and the fifth aspect in which
the treatment section is a filter container,
the pressure application means is a pump, and
the ultrasonic unit
has a filtration structure having a membrane pore size from 0.001 µm to 100 µm, and
generates the ultrasonic vibration from 20 KHz to 4 MHz.

The invention according to a tenth aspect is the ultrasonic liquid treatment apparatus according to the ninth aspect in which
the plural ultrasonic units are arranged, and the filter container is partitioned into plural treatment chambers,
the plural ultrasonic units are each configured to have the small membrane pore size along the flow direction of the liquid, and
the plural treatment chambers each have a collection path for collecting filtration residues.

The invention according to an eleventh aspect is the ultrasonic liquid treatment apparatus according to any one of the second aspect, the third aspect, the fourth aspect, and the fifth aspect in which
the treatment section is a classification/concentration container,
the ultrasonic unit
has a filtration structure having a membrane pore size from 0.1 µm to 100 µm, and
generates the ultrasonic vibration from 20 KHz to 4 MHz, and
the classification/concentration container performs classification/concentration.

The invention according to a twelfth aspect is the ultrasonic liquid treatment apparatus according to the eleventh aspect in which
the ultrasonic unit enables intermittent control of the ultrasonic vibration.

The invention according to a thirteenth aspect is the ultrasonic liquid treatment apparatus according to any one of the second aspect, the third aspect, the fourth aspect, and the fifth aspect in which
the treatment section is a filter container,
the pressure application means is a pump,
the ultrasonic unit
has a filtration structure having a membrane pore size from 0.001 µm to 100 µm, and
generates the ultrasonic vibration from 20 KHz to 4 MHz, and
the filter container performs purification.

The invention according to a fourteenth aspect is the ultrasonic liquid treatment apparatus according to any one of the second aspect, the third aspect, the fourth aspect, and the fifth aspect in which
the treatment section is a filter container, and
the ultrasonic unit
employs cross-flow filtration,
has a filtration structure having a membrane pore size from 0.001 µm to 1 µm, and
generates the ultrasonic vibration from 20 KHz to 4 MHz.

### Advantageous Effects of Invention

With the configuration, the present invention exerts effects as described below.

In the present invention according to the first aspect to the fourteenth aspect, the ultrasonic unit is structured to filter the liquid. The ultrasonic unit filters the liquid for treatment by the ultrasonic vibration of the ultrasonic unit. Alternatively, the ultrasonic unit filters the liquid for treatment by the ultrasonic vibration of the ultrasonic unit in the state of applying the pressure to the liquid. In this way, the liquid treatment is enabled by efficient filtering with the simple configuration.

### Brief Description of Drawings

Fig. 1 is a view illustrating an embodiment of an ultrasonic unit.
Fig. 2 is a view illustrating another embodiment of the ultrasonic unit.
Fig. 3 is a view illustrating further another embodiment of the ultrasonic unit.
Fig. 4 is a view illustrating an embodiment of an ultrasonic liquid treatment apparatus.
Fig. 5 is a view illustrating another embodiment of the ultrasonic liquid treatment apparatus.
Fig. 6 includes views illustrating effects of the ultrasonic liquid treatment apparatus.
Fig. 7 includes views illustrating an ultrasonic liquid treatment apparatus in Example 1.
Fig. 8 includes views illustrating an ultrasonic liquid treatment apparatus in Example 2.
Fig. 9 includes views illustrating an ultrasonic liquid treatment apparatus in Example 3.
Fig. 10 includes views illustrating an ultrasonic liquid treatment apparatus in Example 4.
Fig. 11 includes views illustrating an ultrasonic liquid treatment apparatus in Example 5.
Fig. 12 includes views illustrating an ultrasonic liquid treatment apparatus in Example 6.
Fig. 13 includes views illustrating an ultrasonic liquid treatment apparatus in Example 7.
Fig. 14 includes views illustrating an ultrasonic liquid treatment apparatus in Example 8.
Fig. 15 includes views illustrating an ultrasonic liquid treatment apparatus in Example 9.

### Description of Embodiments

Hereinafter, a description will be made on an embodiment of an ultrasonic liquid treatment apparatus in the present invention. In this embodiment, a preferred embodiment of the ultrasonic liquid treatment apparatus will be described. However, the present invention is not limited thereto. A liquid to be treated is drinking water, an edible liquid, a medicinal solution, a coolant liquid, a cleaning solution, a bio-liquid, seawater, river water, lake water, rainwater, clean water/sewage water, or the like.

### (Ultrasonic Unit)

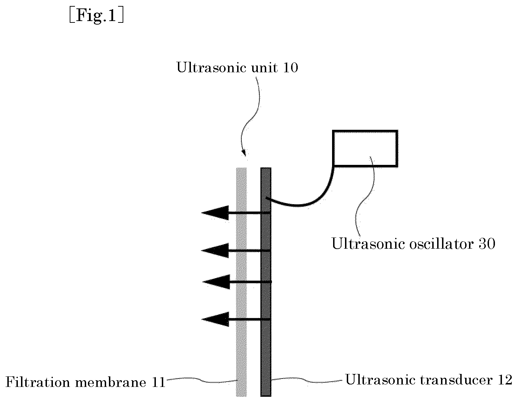

An ultrasonic unit 10 in this embodiment will be described with reference to Figs. 1 to 3. This ultrasonic unit 10 is driven by an ultrasonic transmitter 30.

In the embodiment illustrated in Fig. 1, the ultrasonic unit 10 includes a filtration membrane 11 and an ultrasonic transducer 12, and the filtration membrane 11 and the ultrasonic transducer 12 are separate components. In this separated configuration, the filtration membrane 11 and the ultrasonic transducer 12 only need to be separate objects. In an arrangement structure, it may be configured that the filtration membrane 11 and the ultrasonic transducer 12 are arranged in contact or spaced apart from each other by a predetermined distance.

In this embodiment, the liquid is conveyed by ultrasonic vibration of the ultrasonic transducer 12, and the filtration membrane 11 filters the liquid for treatment.

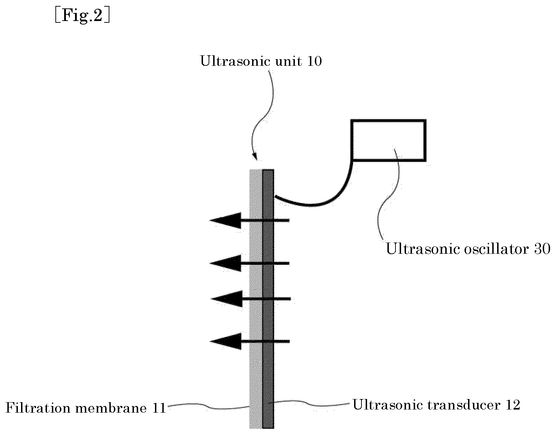

In an embodiment illustrated in Fig. 2, the ultrasonic unit 10 includes the filtration membrane 11 and the ultrasonic transducer 12, and the filtration membrane 11 and the ultrasonic transducer 12 are integrated components. In this integrated configuration, the filtration membrane 11 may be applied to and integrated with the ultrasonic transducer 12, or the filtration membrane 11 may be bonded to and integrated with the ultrasonic transducer 12. Thus, the integrated structure is not particularly limited.

In this embodiment, the filtration membrane 11 vibrates integrally by the ultrasonic vibration of the ultrasonic transducer 12, conveys the liquid, and filters the liquid for treatment.

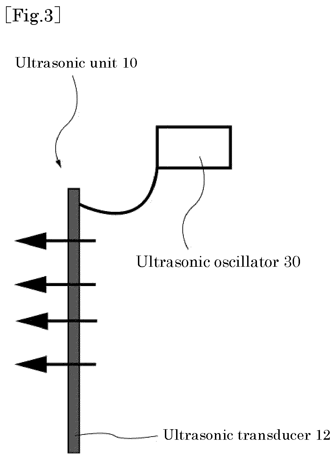

In an embodiment illustrated in Fig. 3, the ultrasonic unit 10 includes the ultrasonic transducer 12, and the ultrasonic transducer 12 is configured as a membrane. In this configuration, the filtration membrane is not used, and only the ultrasonic transducer 12 is provided.

In this embodiment, only with the ultrasonic transducer 12, the liquid is conveyed by the ultrasonic vibration of the ultrasonic transducer 12, and is filtered for treatment.

### [Filtration Membrane]

The filtration membrane 11 is molded from a synthetic resin, for example. An example of the synthetic resin may include at least one of polycarbonate, polysulfone, polyester, polyethylene, and polypropylene. However, the synthetic resin is not particularly limited, and a preferred synthetic resin is selected according to the liquid to be treated.

### [Ultrasonic Transducer]

Examples of the ultrasonic transducer 12 can include a PZT transducer using lead titanate zirconate (a piezoelectric ceramic) and a BL transducer of bolted Langevin-type transducer. Depending on a use condition, only the transducer can be arranged directly, a vibration plate made of metal or the like can be joined to the transducer and arranged, or an acoustic radiator called a horn that is made of metal or the like can be joined and arranged. This ultrasonic transducer may have a plate shape, a rod shape, a cylindrical shape, or the like.

### (Ultrasonic Liquid Treatment Apparatus)

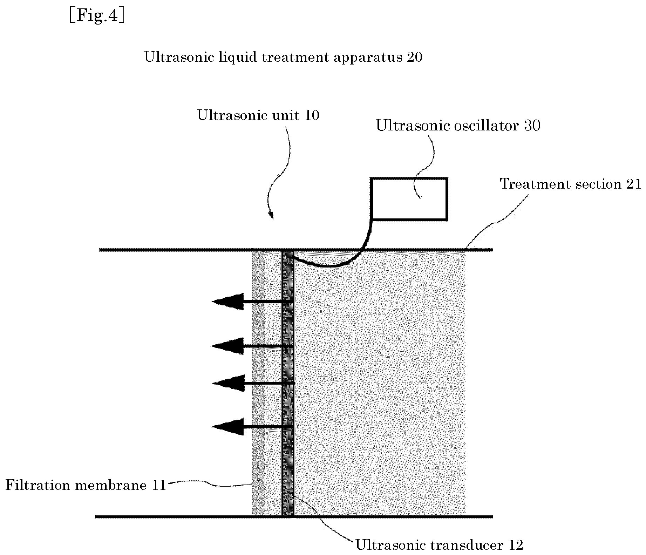

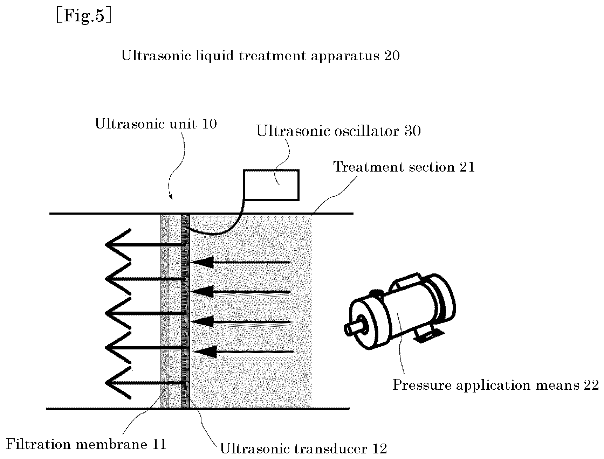

A description will be made on an embodiment of this ultrasonic liquid treatment apparatus 20 with reference to Figs. 4 and 5.

In an embodiment illustrated in Fig. 4, the ultrasonic liquid treatment apparatus 20 includes: a treatment section 21 that treats the liquid; the ultrasonic unit 10 arranged in the treatment section 21; and the ultrasonic transmitter 30 that drives the ultrasonic unit 10. The ultrasonic unit 10 is structured to filter the liquid. The ultrasonic unit 10 conveys the liquid by the ultrasonic vibration of the ultrasonic transducer 12, and filters the liquid through the filtration membrane 11 for treatment.

In this embodiment, the embodiment of the ultrasonic unit 10 in Fig. 1 is used. However, the embodiment thereof in Fig. 2 or the embodiment thereof in Fig. 3 can be used. By the ultrasonic vibration of the ultrasonic unit 10, the ultrasonic unit 10 causes the liquid to flow therethrough and thereby enables filtration treatment.

In an embodiment illustrated in Fig. 5, the ultrasonic liquid treatment apparatus 20 includes: the treatment section 21 that treats the liquid; the ultrasonic unit 10 arranged in the treatment section 21; the ultrasonic transmitter 30 that drives the ultrasonic unit 10; and pressure application means 22 that applies a pressure in a flow direction of the liquid. The ultrasonic unit 10 is structured to filter the liquid. In a state of applying the pressure to the liquid by the pressure application means 22, the ultrasonic unit 10 conveys the liquid by the ultrasonic vibration of the ultrasonic transducer 12, and filters the liquid through the filtration membrane 11 for treatment.

In this embodiment, the embodiment of the ultrasonic unit 10 in Fig. 1 is used, but the embodiment thereof in Fig. 2 or the embodiment thereof in Fig. 3 can be used. By the ultrasonic vibration of the ultrasonic unit 10, it is possible to increase a treatment amount for filtration of the liquid and to reduce the pressure applied in the flow direction of the liquid.

### (Effects of Ultrasonic Liquid Treatment Apparatus)

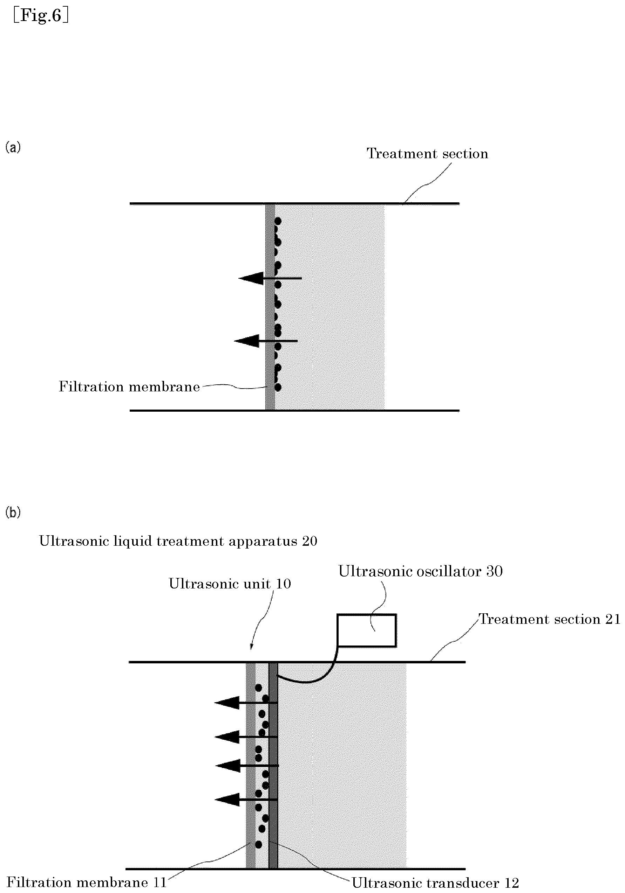

Fig. 6 includes views illustrating effects of the ultrasonic liquid treatment apparatus 20. In a comparative example in Fig. 6(a), a filtration membrane is arranged in a treatment section for treatment by filtration using the filtration membrane. Contaminants and caught substances adhere to the filtration membrane, clog the filtration membrane, and cause a reduction in the treatment amount of the liquid.

In an embodiment illustrated in Fig. 6(b), the ultrasonic unit 10 is arranged in the treatment section 21. This ultrasonic unit 10 is configured in the same manner as the embodiment thereof in Fig. 1, and the filtration membrane 11 and the ultrasonic transducer 12 are the separate components.

This ultrasonic unit 10 filters the liquid while separating and dispersing the contaminants and the caught substances from the filtration membrane 11 and the ultrasonic transducer 12 by the ultrasonic vibration of the ultrasonic transducer 12, and can thereby keep the treatment amount of the liquid.

In the embodiment illustrated in Fig. 6(b), the ultrasonic unit 10 is configured in the same manner as the embodiment thereof in Fig. 1. However, the treatment amount of the liquid can be kept in the same manner even when the ultrasonic unit 10 is configured in the same manner as the embodiment thereof in Fig. 2 or the embodiment thereof in Fig. 3.

### (Examples)

### [Example 1]

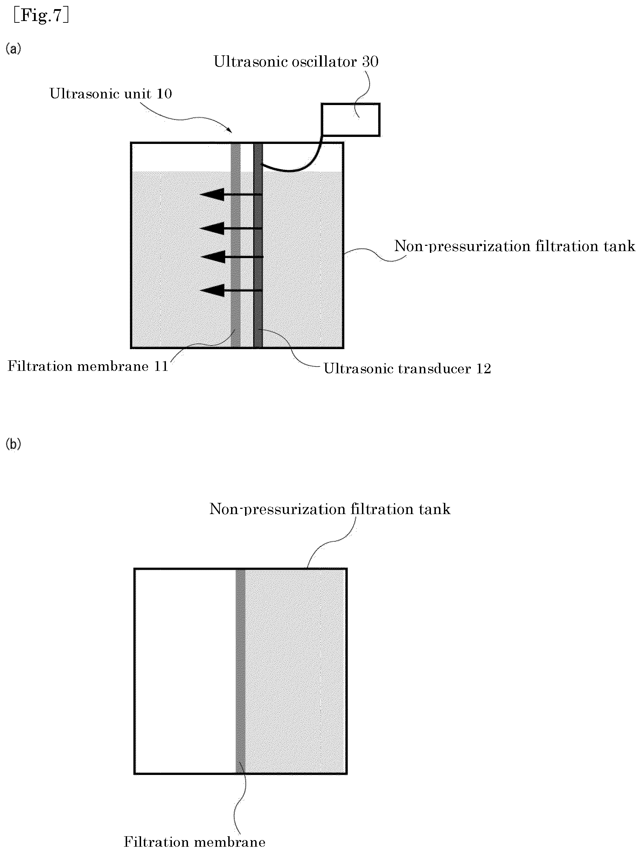

Example 1 will be described with reference to Fig. 7. Fig. 7(a) illustrates the example, and Fig. 7(b) illustrates a comparative example.

In an ultrasonic liquid treatment apparatus in Example 1, the treatment section is a non-pressurization filtration tank. The ultrasonic unit has a filtration structure having a membrane pore size from 0.001 µm to 100 µm, and the ultrasonic vibration thereof is from 20 KHz to 4 MHz. As the liquids, the coolant liquid and sewage water were treated.

The ultrasonic unit includes the filtration membrane and the ultrasonic transducer, and the filtration membrane and the ultrasonic transducer are the separate components.

In this Example 1, by the ultrasonic vibration of the ultrasonic transducer, the liquid could be conveyed, and the filtration membrane could filter the liquid for treatment. Meanwhile, in the comparative example, only the filtration membrane was provided, and the ultrasonic transducer for the ultrasonic vibration was not provided. Thus, the liquid could not be conveyed, and the filtration treatment was insufficient.

The ultrasonic unit had the filtration structure having the membrane pore size from 0.001 µm to 100 µm, and the ultrasonic vibration thereof was from 20 KHz to 4 MHz. In the filtration treatment of the coolant liquid and the sewage water, problems such as contamination of fine substances and the reduction in the treatment amount did not occur. Thus, the preferred filtration treatment could be performed.

### [Example 2]

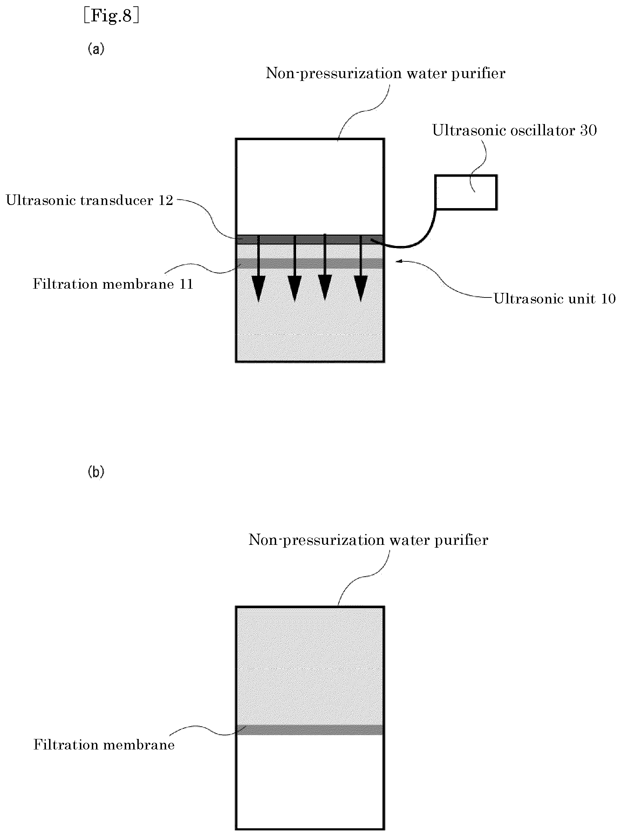

Example 2 will be described with reference to Fig. 8. Fig. 8(a) illustrates the example, and Fig. 8(b) illustrates a comparative example.

In an ultrasonic liquid treatment apparatus in Example 2, the treatment section is a non-pressurization water purifier. The ultrasonic unit has the filtration structure having a membrane pore size from 0.001 µm to 10 µm, and the ultrasonic vibration thereof is from 20 KHz to 4 MHz. As the liquids, water such as seawater, river water, lake water, rainwater, and clean water/sewage water was treated.

The ultrasonic unit includes the filtration membrane and the ultrasonic transducer, and the filtration membrane and the ultrasonic transducer are the separate components.

In this Example 2, by the ultrasonic vibration of the ultrasonic transducer, the filtration membrane could filter the liquid for treatment. Meanwhile, in the comparative example, only the filtration membrane is provided, and the ultrasonic transducer was not provided. Thus, the filtration treatment was insufficient.

The ultrasonic unit had the filtration structure having the membrane pore size from 0.001 µm to 10 µm, and the ultrasonic vibration thereof was from 20 KHz to 4 MHz. In the filtration treatment of seawater, river water, lake water, rainwater, and clean water/sewage water, the problems such as the contamination of the fine substances and the reduction in the treatment amount did not occur. Thus, the preferred filtration treatment could be performed.

### [Example 3]

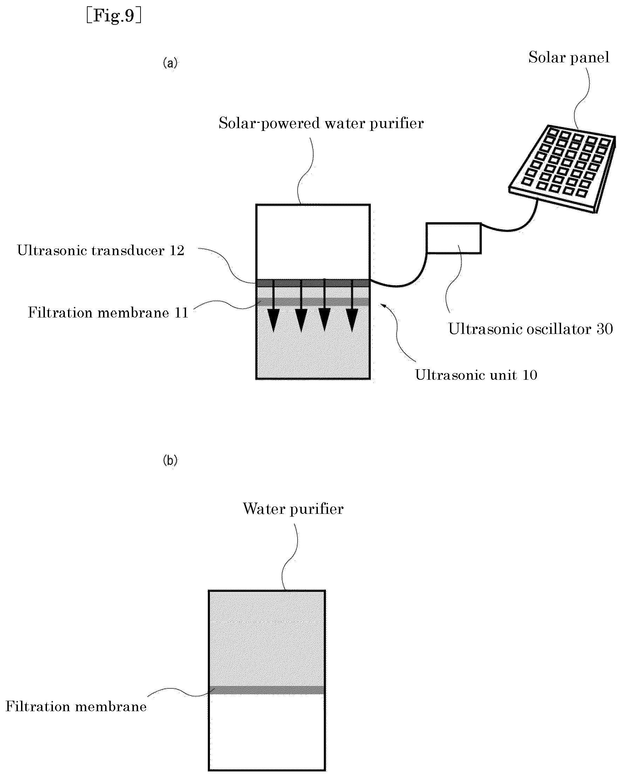

Example 3 will be described with reference to Fig. 9. Fig. 9(a) illustrates the example, and Fig. 9(b) illustrates a comparative example.

In an ultrasonic liquid treatment apparatus in Example 3, the treatment section is a solar-powered water purifier. The ultrasonic unit has the filtration structure having a membrane pore size from 0.001 µm to 10 µm, and the ultrasonic vibration thereof is from 20 KHz to 4 MHz. As the liquids, water such as seawater, river water, lake water, rainwater, and clean water/sewage water was treated.

The ultrasonic unit includes the filtration membrane and the ultrasonic transducer, and the filtration membrane and the ultrasonic transducer are the separate components. The ultrasonic transducer is driven by the ultrasonic transmitter. A solar panel is connected to the ultrasonic transmitter, and the ultrasonic transmitter is powered by the solar panel.

In an area without an electrical infrastructure, in the event of a disaster, or the like, sunlight is used to drive the ultrasonic unit to purify water by taking advantage of power saving achieved by ultrasonic waves.

In this Example 3, by the ultrasonic vibration of the ultrasonic transducer, the filtration membrane could filter the liquid for treatment. Meanwhile, in the comparative example, only the filtration membrane was provided, and the ultrasonic transducer was not provided. Thus, the filtration treatment was insufficient.

The ultrasonic unit had the filtration structure having the membrane pore size from 0.001 µm to 10 µm, and the ultrasonic vibration thereof was from 20 KHz to 4 MHz. In the filtration treatment of seawater, river water, lake water, rainwater, and clean water/sewage water, the problems such as the contamination of the fine substances and the reduction in the treatment amount did not occur. Thus, the preferred filtration treatment could be performed.

### [Example 4]

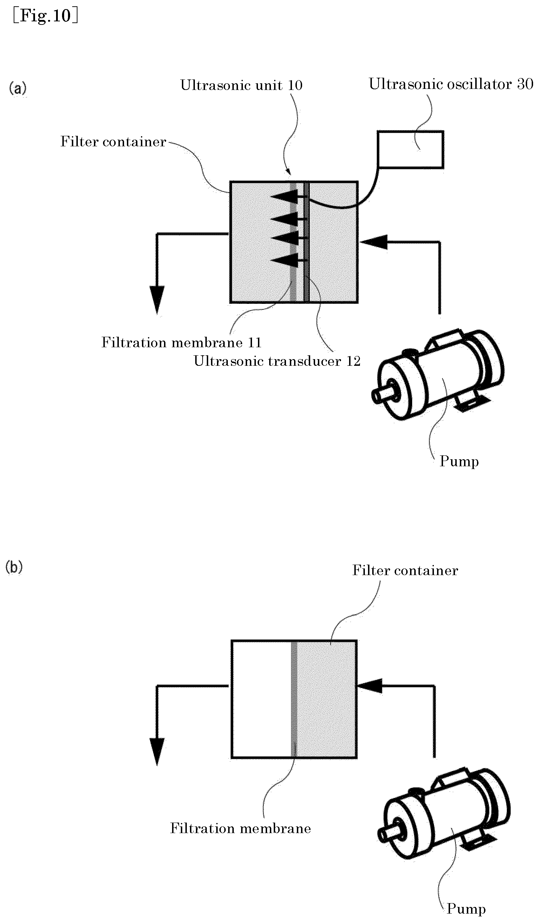

Example 4 will be described with reference to Fig. 10. Fig. 10(a) illustrates the example, and Fig. 10(b) illustrates a comparative example.

In an ultrasonic liquid treatment apparatus in Example 4, the treatment section is a filter container. The ultrasonic unit has the filtration structure having a membrane pore size from 0.001 µm to 100 µm, and the ultrasonic vibration thereof is from 20 KHz to 4 MHz. As the liquids, water such as seawater, river water, lake water, rainwater, and clean water/sewage water was treated.

The ultrasonic unit includes the filtration membrane and the ultrasonic transducer, and the filtration membrane and the ultrasonic transducer are the separate components. A pump was used as the pressure application means that applies the pressure in the flow direction of the liquid.

At 2 Mpa of the pressure by the pump, the treatment amount of flowing water was 40 L/min. At 1 Mpa of the pressure by the pump, the treatment amount of flowing water was 20 L/min.

In this Example 4, by the ultrasonic vibration of the ultrasonic transducer, the filtration membrane could filter the liquid for treatment. Meanwhile, in the comparative example, only the filtration membrane was provided, and the ultrasonic transducer was not provided. Thus, even at 2 Mpa of the pressure by the pump, the treatment amount of flowing water was 20 L/min, and the filtration treatment was insufficient.

The ultrasonic unit had the filtration structure having the membrane pore size from 0.001 µm to 100 µm, and the ultrasonic vibration thereof was from 20 KHz to 4 MHz. In the filtration treatment of seawater, river water, lake water, rainwater, clean water/sewage water, and the like, the problems such as the contamination of the fine substances and the reduction in the treatment amount did not occur. Thus, the preferred filtration treatment could be performed.

### [Example 5]

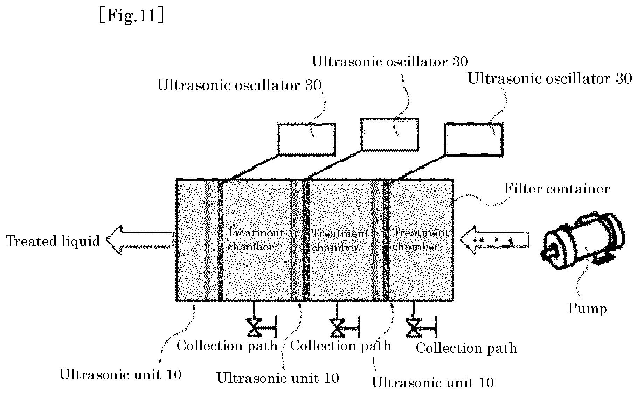

Example 5 will be described with reference to Fig. 11. In Fig. 11, a filter container has a multistage configuration. The plural ultrasonic units are arranged, and the filter container is configured to be partitioned into plural treatment chambers. In this Example, the ultrasonic units are arranged in three locations, and the three treatment chambers are formed. However, the filter container is not limited thereto, and any number of the plural treatment chambers is provided.

Each of the plural ultrasonic units is configured to have a small membrane pore size along the flow direction of the liquid. When viscosity distribution of the liquid to be treated covers a wide range, for example, the ultrasonic units having the membrane pore size of about 10 µm for coarse filtration ultrasonic waves, the membrane pore size of about 0.1 µm for microfiltration ultrasonic waves, and the membrane pore size of about 0.001 µm for ultrafiltration ultrasonic waves are arranged. Such a configuration enables efficient filtration and separation/collection.

The plural treatment chambers each have a collection path for collecting filtration residues, and a separated/collected liquid is collected through this collection path. A valve in the collection path may be configured to be opened all the time or to be opened/closed at regular intervals.

In this ultrasonic liquid treatment apparatus, the treatment section is the filter container. The ultrasonic unit has the ultrasonic vibration from 20 KHz to 4 MHz. As the liquids, seawater, river water, drinking water, the edible liquid, the medicinal solution, the cleaning solution, a biofuel, and the like were treated.

### [Example 6]

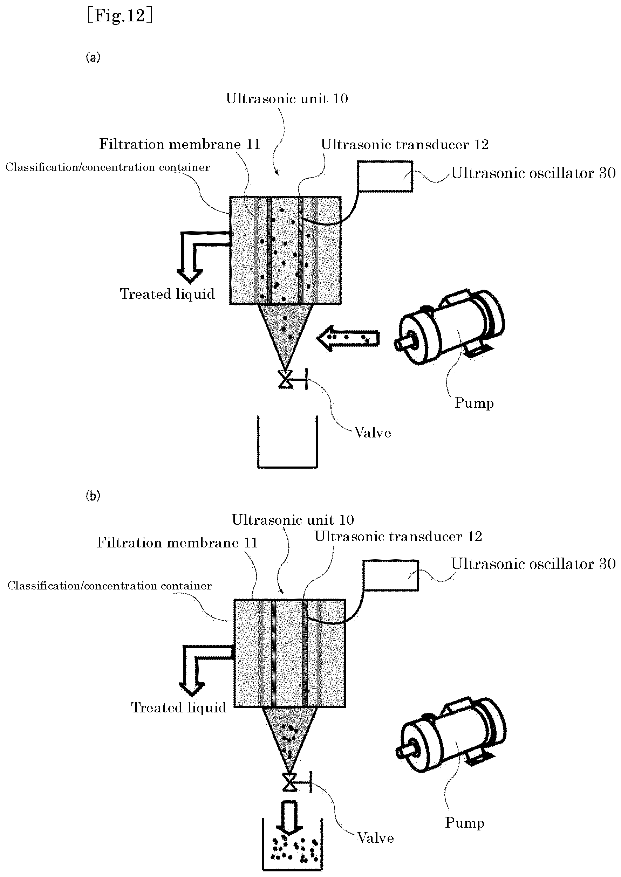

Example 6 will be described with reference to Fig. 12. Fig. 12(a) illustrates a treatment state, and Fig. 12(b) illustrates a collection state.

**In** an ultrasonic liquid treatment apparatus in Example 6, the treatment section is a classification/concentration container. The ultrasonic unit has the filtration structure having a membrane pore size from 0.1 µm to 100 µm, and the ultrasonic vibration thereof is from 20 KHz to 4 MHz. As the liquids, drinking water, the edible liquid, the medicinal solution, the coolant liquid, the cleaning solution, and the bio-liquid were treated.

The ultrasonic unit includes the filtration membrane and the ultrasonic transducer, and the filtration membrane and the ultrasonic transducer are the separate components. The pump was used as the pressure application means that applies the pressure in the flow direction of the liquid.

**In** this Example 6, the liquid is conveyed to the classification/concentration container by the pump. **In** the classification/concentration container, the filtration membrane filters the liquid by the ultrasonic vibration of the ultrasonic transducer, and an uncontaminated clean liquid and collected substances are then subjected to classification/concentration treatment while clogging of the filtration membrane is prevented (Fig. 12(a)).

When the treatment was completed, and the pump was stopped, the collected substances were accumulated at the bottom of the classification/concentration container and were collected by opening the valve (Fig. 12(b)).

The ultrasonic unit had the filtration structure having the membrane pore size from 0.1 µm to 100 µm, and the ultrasonic vibration thereof was from 20 KHz to 4 MHz. **In** the classification/concentration treatment of drinking water, the edible liquid, the medicinal solution, the coolant liquid, the cleaning solution, and the bio-liquid, the problems such as the contamination of the fine substances and the reduction in the treatment amount did not occur. Thus, the preferred classification/concentration treatment could be performed.

### [Example 7]

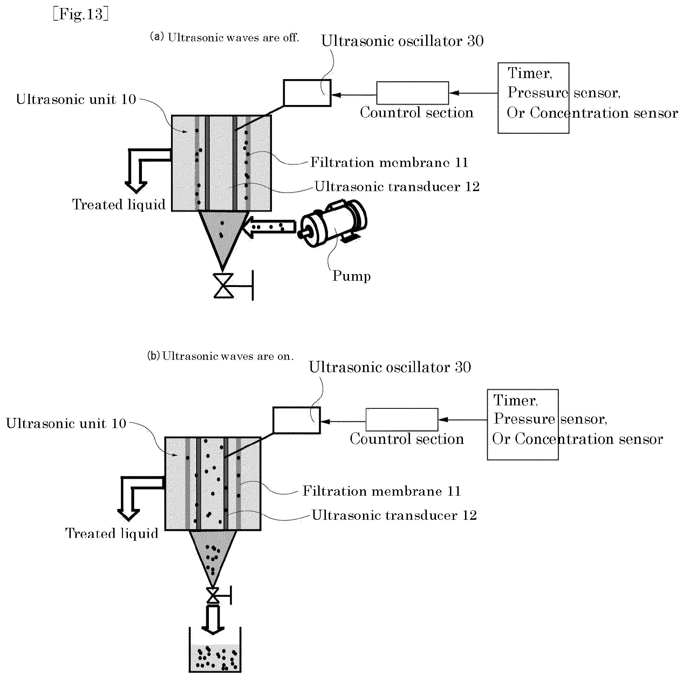

Example 7 will be described with reference to Fig. 13. Fig. 13(a) illustrates intermittent control of the ultrasonic vibration at the time when the ultrasonic waves are off, and Fig. 13(b) illustrates the intermittent control of the ultrasonic vibration at the time when the ultrasonic waves are on.

The ultrasonic unit enables the intermittent control of the ultrasonic vibration. A control section intermittently controls the ultrasonic transmitter on the basis of information from a timer, a pressure sensor for the liquid to be treated, a concentration sensor for the liquid to be treated, and the like. Fig. 13(a) illustrates the time when the ultrasonic waves are off, and Fig. 13(b) illustrates the time when the ultrasonic waves are on.

When it is desired to control the concentration to a certain level or to back-wash the liquid, the intermittent control of the ultrasonic vibration is executed on the basis of the information from the timer, the pressure sensor for the liquid to be treated, the concentration sensor for the liquid to be treated, and the like, and the efficient filtration, separation, and concentration can thereby be achieved.

The ultrasonic unit had the filtration structure having the membrane pore size from 0.01 µm to 100 µm, and the ultrasonic vibration thereof was from 20 KHz to 4 MHz. In the classification/concentration treatment of drinking water, the edible liquid, the medicinal solution, the coolant liquid, the cleaning solution, and the bio-liquid, the problems such as the contamination of the fine substances and the reduction in the treatment amount did not occur. Thus, the preferred classification/concentration treatment could be performed.

### [Example 8]

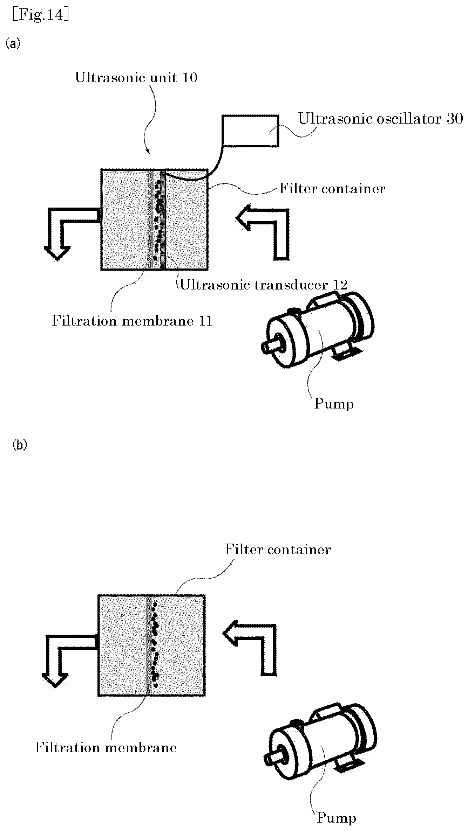

Example 8 will be described with reference to Fig. 14. Fig. 14(a) illustrates the example, and Fig. 14(b) illustrates a comparative example.

In an ultrasonic liquid treatment apparatus in Example 8, the treatment section is the filter container. The ultrasonic unit has the filtration structure having a membrane pore size from 0.001 µm to 100 µm, and the ultrasonic vibration thereof is from 20 KHz to 4 MHz. As the liquids, water such as drinking water, the edible liquid, the medicinal solution, the coolant liquid, the cleaning solution, the bio-liquid, seawater, river water, lake water, rainwater, and clean water/sewage water was treated.

The ultrasonic unit includes the filtration membrane and the ultrasonic transducer, and the filtration membrane and the ultrasonic transducer are the separate components. The pump was used as the pressure application means that applies the pressure in the flow direction of the liquid.

At 0.2 Mpa of the pressure by the pump, the treatment amount of flowing water was 20 L/min.

In this Example 8, by the ultrasonic vibration of the ultrasonic transducer, the contaminants and the caught substances could constantly be separated and dispersed, and the filtration membrane could filter the liquid for treatment without being clogged. Meanwhile, in the comparative example, only the filtration membrane was provided, and the ultrasonic transducer was not provided. Thus, even at 0.2 Mpa of the pressure by the pump, the treatment amount of flowing water was 1 L/min due to clogging, and the filtration treatment was insufficient.

The ultrasonic unit had the filtration structure having the membrane pore size from 0.001 µm to 100 µm, and the ultrasonic vibration thereof was from 20 KHz to 4 MHz. In the filtration treatment of drinking water, the edible liquid, the medicinal solution, the coolant liquid, the cleaning solution, the bio-liquid, seawater, river water, lake water, rainwater, and clean water/sewage water, the problems such as the contamination of the fine substances and the reduction in the treatment amount did not occur. Thus, the preferred filtration treatment could be performed.

### [Example 9]

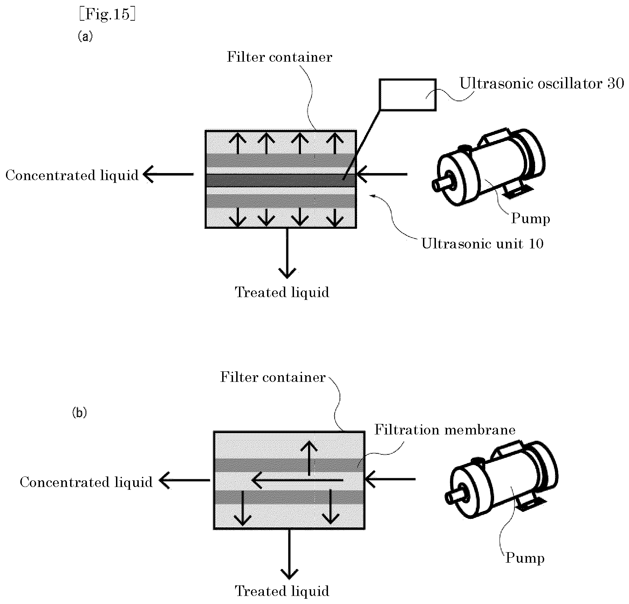

Example 9 will be described with reference to Fig. 15. Fig. 15(a) illustrates the example, and Fig. 15(b) illustrates a comparative example.

In an ultrasonic liquid treatment apparatus in Example 9, the treatment section is the filter container. The ultrasonic unit employs cross-flow filtration and has the filtration structure having a membrane pore size from 0.001 µm to 1 µm, and the ultrasonic vibration thereof is from 20 KHz to 4 MHz. As the liquids, water such as seawater, river water, lake water, rainwater, and clean water/sewage water was treated.

The ultrasonic unit includes the filtration membrane and the ultrasonic transducer, and the filtration membrane and the ultrasonic transducer are the separate components. The pump was used as the pressure application means that applies the pressure in the flow direction of the liquid.

At 0.2 Mpa of the pressure by the pump, a treatment amount of a concentrated liquid was 1 L/min, and a treatment amount of the treated liquid was 10 L/min.

In this Example 9, by the ultrasonic vibration of the ultrasonic transducer, the treated liquid can be increased, and the concentrated liquid can be reduced. Meanwhile, in the comparative example, since the treatment amount of the treated liquid is 1 L/min and thus is small, a large amount of the concentrated liquid is required to obtain a predetermined amount of the treated liquid.

The ultrasonic unit had the filtration structure having the membrane pore size from 0.001 µm to 1 µm, and the ultrasonic vibration thereof was from 20 KHz to 4 MHz. In the filtration treatment of seawater, river water, lake water, rainwater, and clean water/sewage water, the problems such as the contamination of the fine substances and the reduction in the treatment amount did not occur. Thus, the preferred filtration treatment could be performed.

### Industrial Applicability

The present invention is applied to the ultrasonic liquid treatment apparatus that filters the liquid for treatment by the ultrasonic vibration, and enables liquid treatment by efficient filtering with a simple configuration.

### Reference Signs List

10: Ultrasonic unit
11: Filtration membrane
12: Ultrasonic transducer
20: Ultrasonic liquid treatment apparatus
21: Treatment section
30: Ultrasonic transmitter

## Claims

1. An ultrasonic liquid treatment apparatus comprising:
a treatment section that treats a liquid;
an ultrasonic unit that is arranged in the treatment section; and
an ultrasonic transmitter that drives the ultrasonic unit, wherein
the ultrasonic unit is structured to filter the liquid, and
the ultrasonic unit filters the liquid for treatment by ultrasonic vibration of the ultrasonic unit.

2. An ultrasonic liquid treatment apparatus comprising:
a treatment section that treats a liquid;
an ultrasonic unit that is arranged in the treatment section;
an ultrasonic transmitter that drives the ultrasonic unit; and
pressure application means that applies a pressure in a flow direction of the liquid, wherein
the ultrasonic unit is structured to filter the liquid, and
in a state where the pressure application means applies the pressure to the liquid,
the ultrasonic unit filters the liquid for treatment by ultrasonic vibration of the ultrasonic unit.

3. The ultrasonic liquid treatment apparatus according to claim 1 or claim 2, wherein
the ultrasonic unit includes a filtration membrane and an ultrasonic transducer,
the filtration membrane and the ultrasonic transducer are separate components, and
by the ultrasonic vibration of the ultrasonic transducer, the liquid is conveyed, and the filtration membrane filters the liquid for treatment.

4. The ultrasonic liquid treatment apparatus according to claim 1 or claim 2, wherein
the ultrasonic unit includes a filtration membrane and an ultrasonic transducer,
the filtration membrane and the ultrasonic transducer are integrated components,
by the ultrasonic vibration of the ultrasonic transducer, the filtration membrane vibrates integrally and conveys the liquid, and
the filtration membrane filters the liquid for treatment.

5. The ultrasonic liquid treatment apparatus according to claim 1 or claim 2, wherein
the ultrasonic unit includes an ultrasonic transducer,
the ultrasonic transducer is configured as a membrane, and
by the ultrasonic vibration of the ultrasonic transducer, the liquid is conveyed, and the liquid is then filtered for treatment.

6. The ultrasonic liquid treatment apparatus according to any one of claim 1, claim 3, claim 4, and claim 5, wherein
the treatment section is a non-pressurization filtration tank, and
the ultrasonic unit
has a filtration structure having a membrane pore size from 0.001 µm to 100 µm, and
generates the ultrasonic vibration from 20 KHz to 4 MHz.

7. The ultrasonic liquid treatment apparatus according to any one of claim 1, claim 3, claim 4, and claim 5, wherein
the treatment section is a non-pressurization water purifier, and
the ultrasonic unit
has a filtration structure having a membrane pore size from 0.001 µm to 10 µm, and
generates the ultrasonic vibration from 20 KHz to 4 MHz.

8. The ultrasonic liquid treatment apparatus according to any one of claim 1, claim 3, claim 4, and claim 5, wherein
the treatment section is a solar-powered water purifier, and
the ultrasonic unit
has a filtration structure having a membrane pore size from 0.001 µm to 10 µm, and
generates the ultrasonic vibration from 20 KHz to 4 MHz.

9. The ultrasonic liquid treatment apparatus according to any one of claim 2, claim 3, claim 4, and claim 5, wherein
the treatment section is a filter container,
the pressure application means is a pump, and
the ultrasonic unit
has a filtration structure having a membrane pore size from 0.001 µm to 100 µm, and
generates the ultrasonic vibration from 20 KHz to 4 MHz.

10. The ultrasonic liquid treatment apparatus according to claim 9, wherein
the plural ultrasonic units are arranged, and the filter container is partitioned into plural treatment chambers,
the plural ultrasonic units are each configured to have the small membrane pore size along the flow direction of the liquid, and
the plural treatment chambers each have a collection path for collecting filtration residues.

11. The ultrasonic liquid treatment apparatus according to any one of claim 2, claim 3, claim 4, and claim 5, wherein
the treatment section is a classification/concentration container,
the ultrasonic unit
has a filtration structure having a membrane pore size from 0.1 µm to 100 µm, and
generates the ultrasonic vibration from 20 KHz to 4 MHz, and
the classification/concentration container performs classification/concentration.

12. The ultrasonic liquid treatment apparatus according to claim 11, wherein
the ultrasonic unit enables intermittent control of the ultrasonic vibration.

13. The ultrasonic liquid treatment apparatus according to any one of claim 2, claim 3, claim 4, and claim 5, wherein
the treatment section is a filter container,
the pressure application means is a pump,
the ultrasonic unit
has a filtration structure having a membrane pore size from 0.001 µm to 100 µm, and
generates the ultrasonic vibration from 20 KHz to 4 MHz, and
the filter container performs purification.

14. The ultrasonic liquid treatment apparatus according to any one of claim 2, claim 3, claim 4, and claim 5, wherein
the treatment section is a filter container, and
the ultrasonic unit
employs cross-flow filtration,
has a filtration structure having a membrane pore size from 0.001 µm to 1 µm, and
generates the ultrasonic vibration from 20 KHz to 4 MHz.
